# EUROPEAN PATENT SPECIFICATION

(11) **EP 3 873 224 B1**
(45) Date of publication and mention of the grant of the patent: **11.10.2023**
(21) Application number: 19794939.9
(22) Date of filing: 22.10.2019
(51) Int. Cl.: A23G 1/00, A23G 1/54, A23G 3/54, A23G 3/34

(54) **CONFECTIONERY SHELLS AND METHOD FOR MANUFACTURING THE SAME**
KONFEKTHÜLLEN SOWIE VERFAHREN ZU DEREN HERSTELLUNG
COQUES DE CONFISERIE ET PROCÉDÉ POUR LES FABRIQUER

(30) Priority: 01.11.2018 GB 201817896
(43) Date of publication of application: 08.09.2021
(73) Proprietor: Kraft Foods Schweiz Holding GmbH, 6300 Zug (CH)
(72) Inventor: CHILVER, Ian, Bournville Lane Bournville B30 2LU (GB); SEYLLER, Milena, 28217 Bremen (DE); RAPP, Jean-Philippe, 28217 Bremen (DE)
(74) Representative: Wilson Gunn
(86) International application number: PCT/EP2019/078731
(87) International publication number: WO 2020/088992

(56) References cited:
- WO-A1-2015/191708
- GB-A- 2 432 773
- US-S1- D0 644 408

## Description

### Technical Field of the Invention

The present invention relates to at least partially filled, and unfilled, confectionery shells and a method for manufacturing the same. The invention further relates to at least partially filled confectionery products formed from at least one at least partially filled confectionery shell.

### Background to the Invention

It is known to produce confectionery shells, such as chocolate shells, by depositing a confectionery composition into a mould and pressing it into the mould with an extremely cold stamp, in a process known as "cold-stamping", thereby simultaneously shaping and cooling/solidifying the composition into a "shell". Such methods provide for extremely quick formation of a solid confectionery shell from a liquid composition, and can give high levels of control and reproducibility of the thickness of the shells.

It is known to form some confectionery products, in the form of chocolate eggs, by cold-stamping the bottom half or portion of the egg as one part and the top half or portion of the egg as a second part. The bottom part of the egg can then be filled before the top part of the egg is joined by heating the rims of the parts and connecting them. This creates an egg with a filling partly filling the egg, and an air space at the top. It can be difficult to ensure no filling is spilled when depositing the filling into the bottom, especially through a narrow opening. In addition, since eggs are ovoid, creating a "bottom" and "top" which are asymmetrical can increase manufacturing complexity and costs as well as create difficulties in ensuring that the asymmetrical parts are in register when joining them together.

In a variant of the above process, the bottom and top parts of the egg may have mating connections which are integrally formed during moulding, and which provide a male-to-female connection, such as the bottom part providing a stepped-in rim arranged to fit inside the top part. Although this configuration may avoid some issues of ensuring the parts are in register before joining, the likelihood of product breakage is higher due to more complex parts being present.

An alternative process is to form two identical shell halves by cold-stamping, fill one or both halves and then book-mould them together (by heating the rims of the shell halves, bringing them into contact, and allowing them to cool) to form the filled confectionery product, as this allows for a single mould and stamp setup to be used to form both the shell halves. However, this method does not allow easy control of the level, location and/or amount of mixing of the filling(s) within the product, and it is difficult to prevent the filling from settling across the whole of a half shell and contacting both ends of a shell, if it is desired to only partly fill the product. This is especially true with substantially non-viscous liquid fillings. This method also does not allow for the formation of defined layers within the final filled product, for example layers with different fillings, an unfilled layer, layers of inclusions etc.

GB 2 432 773 A and WO 2015/191708 A1 both disclose cold-stamp manufacturing of filled wafer/chocolate shell products, in which a chocolate shell comprises two or more joined hollow finger sections, joined by a central divider, with all sections subsequently filled.

It would therefore be advantageous to provide a method of manufacturing a confectionery shell, preferably by cold-stamping, which allows for the controlled formation of at least two distinct fillable sections within the shell.

It would also be advantageous to provide a method of manufacturing a filled confectionery shell with at least two distinct fillable sections, preferably by cold-stamping, whereby a filling in one section is at least partially prevented from entering an adjacent section.

It would also be advantageous to provide a method of manufacturing a filled confectionery product by sealing a cold-stamped shell, which allows for the controlled formation of multiple distinct sections which may be filled with the same or different fillings, or may be unfilled, as desired.

It would further be advantageous to provide a more efficient and cost-effective method of manufacturing a filled confectionery product with at least two distinct sections within the confectionery product.

It is therefore an aim of embodiments of the invention to overcome or mitigate at least one problem of the prior art.

### Summary of the Invention

The present invention is defined by the claims.

According to a first aspect of the invention there is provided a method of manufacturing a partially-filled confectionery shell comprising the steps of;
a) depositing a solidifiable confectionery material into a mould cavity;
b) moulding the solidifiable confectionery material within the mould cavity to form a confectionery shell;
c) forming at least one separating member integral with and protruding from the confectionery shell which defines a boundary between at least two sections of the confectionery shell; and
d) depositing an edible material into at least one section of the confectionery shell to form a partially-filled confectionery shell, wherein the at least one separating member prevents at least a portion of the edible material within a section from entering an adjacent section, and wherein no edible material is deposited into at least one section.

Steps b) and c) may be performed separately or simultaneously.

Step b) may comprise cold-stamping the solidifiable confectionery material. In such embodiments, step c) may comprise using a stamp configured to form the at least one separating member. The stamp may be configured to both mould the confectionery shell in step b) and form the at least one separating member in step c), such that steps b) and c) comprise a single step of cold-stamping the solidifiable confectionery material within the mould cavity to form a confectionery shell, using a stamp configured to form at least one separating member integral with and protruding from the confectionery shell which defines a boundary between at least two sections of the confectionery shell.

In embodiments comprising cold-stamping, the method may comprise an additional step of removing the stamp from the mould cavity.

"Cold-stamping" refers to the process of pressing the solidifiable confectionery material against the wall of the mould cavity with a stamp having a surface temperature below the solidification temperature of the confectionery material, in order to shape and at least partially solidify the confectionery material in the mould cavity.

"Stamp" may refer to any single member or body, or collection of members or bodies, arranged to be pressed into the mould cavity, such that all members or bodies of the entire "stamp" may be simultaneously present within the mould cavity for a stretch of time. In embodiments with multiple stamp members or bodies, preferably all members or bodies are pressed into and removed from the mould substantially simultaneously.

The method may comprise forming a confectionery shell comprising a shell wall, wherein the at least one separating member protrudes from said shell wall.

The solidifiable confectionery material may be a molten material.

The solidifiable material may be substantially solid at room or ambient temperature (such as 20-25 °C) and pressure but may be in a heated or processed form such that it is in a flowable, plastic or clay-like state in order that it can be shaped before solidification.

The solidifiable confectionery material may be selected from a liquid, a syrup, a gel, a paste, a suspension and an emulsion, for example. In embodiments in which the confectionery material is cold-stamped, the material is preferably a liquid such as a molten liquid.

The solidifiable confectionery material may comprise candy or chocolate, which is preferably liquid chocolate, in step a). The chocolate may be selected from white chocolate, milk chocolate, dark chocolate, plain chocolate and compound chocolate, for example.

In some embodiments, the stamp comprises at least one stamp body with at least one cavity or recess into which at least a portion of the solidifiable confectionery material flows, in use, and wherein the confectionery material which flows into the or each cavity or recess at least partially solidifies to form at least one separating member.

In some embodiments, the stamp may comprise two or more stamp bodies with at least one gap therebetween into which at least a portion of the solidifiable confectionery material flows, in use, and wherein the confectionery material which flows into the or each gap at least partially solidifies to form at least one separating member.

The stamp may comprise a single stamp body with at least one cavity or recess located therein, or may comprise two or more stamp bodies with gaps therebetween. In embodiments comprising two or more stamp bodies, at least one stamp body may comprise at least one cavity or recess therein. Therefore, any combination of gaps and cavities/recesses may be employed, and is encompassed by the present invention.

The at least one cavity/recess or gap may comprise a slot or channel through a stamp or stamp body, such that the at least one cavity/recess or gap is in fluid communication with the environment outside the bottom surface of the stamp or stamp body (i.e. the surface which is pressed into the mould cavity) via an opening, e.g. a bottom opening, and with the environment outside a separate surface of the stamp or stamp body, such as a top surface (i.e. a surface which is not arranged to abut a portion of the mould cavity when the stamp is pressed into the mould cavity) via another opening, e.g. a top opening. In other embodiments, at least one cavity/recess or gap may comprise 2 or more such (top) openings.

Such cavities/recesses or gaps may allow for substantially or relatively unconstrained formation of the at least one separating member which they form, that is to say that the cavity/recess or gap in the stamp may not be completely filled with confectionery material during the cold-stamping operation and may allow air to escape from the mould cavity (out of the top opening(s)) during the cold-stamping operation. This may be advantageous as it may allow the cavity/recess or gap to take up any variability in the amount of confectionery material deposited into a mould cavity between different cold-stamping operations within a mould and/or between moulds. This may provide the advantage that the amount of confectionery material deposited into a mould cavity will not have to be so precisely controlled, which may reduce manufacturing complexity and/or cost.

For gaps formed between two or more stamp bodies and comprising a single top opening, the top opening of the gap may comprise substantially the same cross-sectional profile as the gap itself, or may be a substantial continuation of the gap which has a larger cross-sectional area and/or different cross-sectional profile to at least part of the gap. For gaps formed between two or more stamp bodies and comprising a single top opening, the top opening of the gap may span the width or length of the stamp.

For cavities or recesses formed within a single stamp body and comprising a single top opening, the upper end of the cavity or recess may be as described above for gaps formed between two stamp bodies, except they are not able to span the entire width, length or diameter of the stamp body, as this would in effect form two distinct stamp bodies.

The at least one cavity/recess or gap may comprise any shape or cross-section (such as circular, square, rectangular etc.) and may have a minimum length, width and/or diameter of 1 mm, 2 mm, 3 mm, 4 mm, 5 mm, 10 mm, 15 mm, 20 mm, 25 mm, 30 mm, 35 mm, 40 mm, 45 mm or 50 mm and/or a maximum length, width and/or diameter of 1 mm, 2 mm, 3 mm, 4 mm, 5 mm, 10 mm, 15 mm, 20 mm, 25 mm, 30 mm, 35 mm, 40 mm, 45 mm or 50 mm.

In embodiments wherein at least one cavity/recess or gap comprises more than one top opening, the at least two top openings may comprise a series or array of openings, such as a multi-perforated surface.

In embodiments comprising two or more stamp bodies, at least two of the stamp bodies may be operably connected to the same actuator, such that they are configured to be driven into the mould at the same time, upon actuation of the common actuator. In some embodiments, at least two stamp bodies may be operably connected to different actuators, such that they can be configured to be driven into the mould at the same time or at different times.

The stamp may comprise any combination of a single stamp body operably connected to a single actuator, two or more stamp bodies operably connected to a common actuator and two or more stamp bodies operably connected to different actuators. In preferred embodiments, all stamp bodies are pressed into the mould substantially simultaneously, which may be effected for example by actuating a single actuator common to all stamping bodies, or by actuating two or more actuators substantially simultaneously. In other embodiments, the method may comprise pressing at least one stamp body operably connected to a first actuator into the mould cavity and/or solidifiable confectionery material by actuating the first actuator, and then pressing at least one stamp body operably connected to a second actuator into the mould cavity and/or solidifiable confectionery material by actuating a second actuator.

The surface temperature of the stamp may be no more than 10 °C, 5 °C, 0 °C, - 5 °C, -10 °C or no more than -15 °C (such as between -10 °C and -20 °C, for example) immediately prior to and/or during and optionally after step b). The surface temperature of the stamp may be adjusted according to the solidification temperature of the solidifiable confectionery material in the mould cavity.

The stamp may be pressed into the mould cavity and/or solidifiable confectionery material for at least 1 second, 2 seconds, 3 seconds, 4 seconds or at least 5 seconds. The stamp may be pressed into the mould cavity and/or solidifiable confectionery material for no more than 10 seconds, 5 seconds or no more than 3 seconds. The stamp may be pressed into the mould cavity and/or solidifiable confectionery material for between 1 to 10 seconds such as between 1 to 5 seconds or 1 to 3 seconds.

In some embodiments, a lower surface temperature of the stamp may be advantageous as it may facilitate shorter stamping times as the confectionery material will solidify more quickly, which may, for example, decrease manufacturing time. In other embodiments, a higher surface temperature of the stamp may be advantageous, as it may allow the confectionery material to flow further into the or each cavity or recess of the or each stamp body, into the or each gap between stamp bodies and/or around the stamp, before solidifying, which may facilitate higher levels of control over the dimensions of the or each separating member and/or confectionery shell wall.

The stamp and mould cavity may be formed in any desired shape so as to vary the shape of the confectionery shell as desired. In some embodiments, the stamp and mould cavity have differing shapes so as to form areas of differing thickness of confectionery material when the stamp is pressed into the confectionery material in the mould cavity. In other embodiments, the stamp and mould cavity are adapted to closely match each other in order to form a confectionery shell wall with a substantially uniform thickness throughout. It will be understood by the person skilled in the art that the less a part of a stamp is pressed into an area of a mould cavity, the thicker the part of the shell in that area will be, and vice versa. It will also be understood that different stamps with different arrangements of cavities or recesses and/or gaps may be used with different mould cavities with different shape, depth, surface texture etc. in order to easily obtain confectionery shells with a variety of combinations of separating member arrangements and wall/shell shapes, thicknesses and/or surface textures.

In some embodiments, the mould may already contain one or more confectionery shells, and so the solidifiable confectionery material is deposited and cold-stamped into the already-existing shell(s).

The surface of the or each stamp and/or the mould cavity surface may comprise a plurality of joined planar surfaces (such as polyhedral surfaces), a curved surface or combinations thereof. The surface of the or each stamp and/or the mould cavity surface may be even or uneven. In some embodiments, the surface of the or each stamp and/or the mould cavity surface may comprise bumps, undulations or other raised or embossed textured areas. In some embodiments, the mould cavity may comprise at least one setin area or cavity.

It will be understood that the discussion below in relation to physical parameters of the separating members (for example thickness, height), unless indicated otherwise, is implicitly linked with discussion of the corresponding stamp which formed them. For example, for a separating member with a particular height, the stamp which formed it may have a cavity or recess with a depth into the stamp at least equivalent to said height, or a gap between individual stamp bodies with a height substantially at least equivalent to said height. Similarly, a separating member with at least a portion with a particular thickness corresponds to a stamp cavity or recess, or gap between individual stamp bodies, comprising at least a corresponding portion with a thickness substantially at least equivalent to said thickness.

As described hereinabove, separating member formation may be substantially unconstrained, wherein the corresponding cavity, recess or gap which formed it may not have the exact same dimensions as the separating member formed within it, as it does not necessarily have to be completely filled with confectionery material, and comprises at least one top opening through which air may escape form the mould cavity during the cold-stamping operation. However, in some embodiments, the cavity, recess or gap (with at least one top opening) may be completely filled to the level of the top opening(s).

In some embodiments, separating member formation may be substantially constrained, wherein the corresponding cavity, recess or gap does not comprise a top opening, and is completely filled with confectionery material during cold-stamping, such that the separating member that it forms has substantially the same dimensions as it. Such embodiments may be advantageous as they may allow more control over the exact dimensions of a separating member, as the confectionery material completely fills the cavity, recess or gap such that changing the dimensions of the cavity, recess or gap directly affects the dimensions of the cavity, recess or gap.

The at least one separating member may comprise a barrier, dam or baffle.

The method may comprise forming at least one separating member which protrudes (or which has a top edge that protrudes) into the shell to at least 5%, 10%, 15%, 20%, 25%, 30%, 35%, 40%, 45%, 50%, 55%, 60%, 65%, 70%, 75%, 80%, 85%, 90% or at least 95% of the height of the shell rim, and may protrude into the shell up to 100% towards the shell rim. The method may comprise forming at least one separating member which protrudes (or which has a top edge or surface that protrudes) into the shell to no more than 95%, 90%, 85%, 80%, 75%, 70%, 65%, 60%, 55%, 50%, 45%, 40%, 35%, 30%, 25%, 20%, 15%, 10% or no more than 5% of the height of the shell rim.

In some embodiments, the method may comprise forming at least one separating member (or a top edge or surface thereof), all or a portion of which protrudes substantially to the level of the shell rim, such that the portion or member is level (i.e. parallel) with the rim of the shell. In such embodiments, the method may comprise forming at least one separating member (or a top edge or surface thereof) which protrudes substantially to the level of the shell rim along at least 30%, 40%, 50%, 55%, 60%, 65%, 70%, 75%, 80%, 85%, 90% or at least 95% of its length (such as 100%) and/or protrudes substantially to the level of the shell rim along no more than 30%, 40%, 50%, 55%, 60%, 65%, 70%, 75%, 80%, 85%, 90% or no more than 95% of its length.

In some embodiments, the method may comprise forming at least one separating member (or a top edge or surface thereof), all or a portion of which does not reach the level of the shell rim. In such embodiments, the method may comprise forming at least one separating member (or a top edge or surface thereof) which does not reach the level of the shell rim along at least 30%, 40%, 50%, 55%, 60%, 65%, 70%, 75%, 80%, 85%, 90% or at least 95% of its length (such as 100%) and/or which does not reach the level of the shell rim along no more than 30%, 40%, 50%, 55%, 60%, 65%, 70%, 75%, 80%, 85%, 90% or no more than 95% along its length.

In some embodiments, the method may comprise forming at least one separating member (or a top edge or surface thereof), all or a portion of which protrudes from the shell to beyond (i.e. above) the level of the shell rim. In such embodiments, the method may comprise forming at least one separating member (or a top edge or surface thereof) which protrudes to beyond the level of the shell rim along at least 30%, 40%, 50%, 55%, 60%, 65%, 70%, 75%, 80%, 85%, 90% or at least 95% of its length (such as 100%) and/or protrudes to beyond the level of the shell rim along no more than 30%, 40%, 50%, 55%, 60%, 65%, 70%, 75%, 80%, 85%, 90% or no more than 95% of its length.

The method may comprise forming at least one separating member (or a top edge or surface thereof) with a uniform height along its length or with a varying height along its length. The method may comprise forming at least one separating member (or a top edge or surface thereof) with a height that follows an arcuate path such that it has a maximum height at its apex, or such that it has a minimum height at its trough. The method may comprise forming at least one separating member (or a top edge or surface thereof) with a height that follows an oscillating path, such as a zig-zag or a waveform (such as a sine, square, triangle or sawtooth waveform).

In some embodiments, the method may comprise forming at least one separating member comprising a substantially level top edge, which may be configured such that the top edge protrudes to beyond the level of the shell rim, is level with the shell rim, or which does not reach the level of the shell rim.

In embodiments wherein the method comprises forming at least one separating member (or a top edge or surface thereof) comprising at least a portion which protrudes to beyond the level of the shell rim, the at least one separating member (or top edge or surface thereof) may protrude to a minimum of 1 mm, 2 mm, 3 mm, 4 mm, 5 mm, 6 mm, 7 mm, 8 mm, 9 mm, 10 mm, 15 mm, 20 mm or a minimum of 30 mm beyond the rim of the shell.

In embodiments wherein the method comprises forming at least one separating member (or a top edge or surface thereof) comprising at least a portion which does not reach the level of the shell rim (i.e. it has a height lower than the shell rim), the at least one separating member (or top edge or surface thereof) may protrude to a minimum height of 5%, 10%, 15%, 20%, 25%, 30%, 40%, 50%, 60%, 70%, 80%, 90% or 95% (such as 100%) towards the shell rim such as to a minimum height of 0.5 mm, 1 mm, 1.5 mm, 2 mm, 2.5 mm, 3 mm, 3.5 mm, 4 mm, 4.5 mm, 5 mm, 10 mm, 15 mm, 20 mm, 25 mm, 30 mm, 35 mm, 40 mm, 45 mm, or 50 mm below the rim of the shell, and/or to a maximum height of 5%, 10%, 15%, 20%, 25%, 30%, 40%, 50%, 60%, 70%, 80%, 90% or 95% (such as 100%) towards the shell rim such as to a maximum height of 0.5 mm, 1 mm, 1.5 mm, 2 mm, 2.5 mm, 3 mm, 3.5 mm, 4 mm, 4.5 mm, 5 mm, 10 mm, 11 mm, 12 mm, 13 mm, 14 mm, 15 mm, 16 mm, 17 mm, 18 mm, 19 mm, 20 mm, 25 mm, 30 mm, 35 mm, 40 mm, 45 mm or 50 mm below the rim of the shell.

Controlling the maximum height of at least one separating member may be advantageous for sufficiently viscous edible materials deposited into an adjacent section, as it allows a lower height of the separating member(s) to be used, while the edible material may be filled above the height of the separating member(s) and still hold its form and be separated from adjacent sections. Therefore, less confectionery material may be required to form the separating member(s), while allowing a larger amount of edible material to be used than would be possible for substantially non-viscous (e.g. liquid) edible materials with the same height of separating member(s).

In some embodiments, the method comprises forming at least one separating member which protrudes to a minimum height of 90% towards the shell rim, preferably 95%, and in some embodiments, even more preferably substantially 100% towards the shell rim. In such embodiments, the separating member(s) effectively creates whole compartments within the confectionery shell which can hold a large amount of edible material (even edible materials with a relatively low viscosity, such as liquid edible materials).

In some embodiments, the method comprises forming at least one separating member which protrudes to a maximum height of 5%, 10%, 15%, 20%, 25% or 30% towards the shell rim. In such embodiments, the at least one separating member will be a small feature, but will still be able to keep viscous fillings substantially separated from adjacent sections for a minimum or desired period of time. In some embodiments, it may be desired to keep the (viscous) fillings substantially separated for a certain period of time, however a certain amount of meeting of two adjacent fillings or deformation of one filling may be allowable, as long as the filling does not substantially flow into an adjacent section. Such small separating members may be advantageous, as they may allow for substantial separation of edible materials (for example when making an at least partially filled product by the method of the second aspect of the invention) while being a relatively small feature that a consumer may not notice, and will not significantly obstruct access to the layer(s) within the product. They also allow for multiple sections to be formed using less confectionery material than if taller separating members were used.

The height of the top edge of at least one separating member may follow the curvature (or lack of it) of the wall of the shell, such that the distance of the top edge of the at least one separating member from the wall of the shell remains substantially constant along its length. In other embodiments, the distance of the top edge of at least one separating member from the wall of the shell may vary along its length, which may occur, for example, if the top edge of the separating member is substantially level in an embodiment wherein the shell comprises an unlevel base or surface, such as a curved base or surface, or if the top edge of the separating member follows an arcuate or curved path in an embodiment wherein the shell comprises a substantially level base or surface.

The method may comprise forming the or each separating member at any suitable position along the length of the shell, such as 10%, 20%, 30%, 40%, 50%, 60%, 70%, 80% or 90% of the way along the shell, or half, a third, a quarter, a fifth etc. of the way along the shell.

The method may comprise forming at least one separating member protruding orthogonally from the shell. The method may comprise forming at least one separating member protruding from the shell at an angle away from orthogonal, such as at least 5°, 10°, 15°, 20°, 25°, 30°, 35°, 40°, 50°, 60°, 70° or at least 80° from orthogonal. Varying the angle may allow for control over the volume of adjacent sections, and hence over the amount of any edible material which may be deposited into them. The angle of the separating members may also be varied to improve ease of filling of at least one adjacent section, for example a separating member which is substantially perpendicular to the longitudinal axis of the shell may allow for easier filling, especially with more viscous fillings which will not flow particularly quickly to fill a section after it is deposited.

In some embodiments, the method may comprise forming at least one separating member which is a substantially straight line. In other embodiments, the method may comprise forming at least one separating member which follows a winding, curved, non-linear, oscillating or zig-zagging path.

The method may comprise forming at least one separating member with a uniform thickness along its length or with a varying thickness along its length.

The method may comprise forming at least one separating member with a minimum thickness of 0.5 mm, 1 mm, 1.5 mm, 2 mm, 2.5 mm or at least 3 mm. The method may comprise forming at least one separating member with a maximum thickness of 10 mm, 9 mm, 8 mm, 7 mm, 6 mm, 5 mm, 4 mm, 3 mm, 2.5 mm, 2 mm, 1.5 mm, 1 mm or 0.5 mm. The method may comprise forming at least one separating member with a thickness in the range of between 0.5 mm to 5 mm, such as between 0.5 mm to 3 mm or between 0.5 mm to 2 mm.

The method may comprise forming at least one separating member which comprises an unbranched line, a branched line, two or more intersecting lines or any suitable combination thereof. In embodiments where at least one separating member is formed which comprises a single line, the at least one separating member will define a boundary between two sections within the shell. In embodiments where at least one separating member is formed which comprises two or more intersecting lines or one or more branched lines, the at least one separating member will define boundaries between at least three sections within the shell. For example, a separating member comprising two unbranched lines which intersect once will define boundaries between four sections within the shell, whereas a separating member comprising a line with a single line branching therefrom will define boundaries between three sections within the shell.

The method may comprise forming at least 1, 2, 3, 4, 5, 6, 7, 8, 9 or at least 10 distinct separating members (and hence cavities/recesses or gaps in the stamp). By "distinct", it is meant separating members (or stamp cavities/recesses or gaps) which do not connect or share a corner, edge or surface, and can therefore be considered as separate entities. A branching separating member (or stamp cavity/recess or gap) is therefore considered as a single (distinct) separating member (or stamp cavity/recess or gap).

The method may comprise forming a plurality of separating members arranged to define/define boundaries between at least 2, 3, 4, 5, 6, 7, 8, 9 or at least 10 sections within the shell.

The method may comprise forming at least one separating member, all or a portion of which has a uniform thickness from its base (i.e. where it joins the shell) to its top edge or which has a varying thickness from its base to its top edge.

The method may comprise forming at least one separating member which is tapered. In such embodiments, the at least one tapering separating member may taper inwardly further away from the wall of the confectionery shell. For example, the at least one separating member may be wedge-shaped or conical.

It will be understood that many other arrangements of separating members may be possible as will be envisaged by the person skilled in the art, and are deemed to be within the scope of the invention as long as the separating member(s) defines at least two distinct sections within the confectionery shell. The single separating member (in embodiments comprising one separating member), or any number of separating members (in embodiments comprising more than one separating member), may comprise any combination of the features mentioned above.

The edible material may comprise a filling. The edible material may be selected from a solidifiable material, such as a liquid, paste, gel, mousse or solid particles or pieces. The edible material may be selected from a fat-based filling, cream, ice cream, fondant, nougat, marshmallow(s), mousse, caramel, salted caramel, toffee, peanut butter, confectionery material, baked items, inclusions, or any combination thereof. Suitable confectionery material includes chocolate or melted chocolate (white, milk, dark, plain or compound), fat-based confectionery materials (such as compound chocolate, emulsions or mousse, for example) and candy compositions. Suitable baked items include any kind of cake, biscuit, baked goods or pieces thereof. Suitable inclusions include whole nuts, crushed nuts, chopped nuts, fruit, chopped fruit, dried fruit, raisins, popcorn, corn, crushed corn and crisp rice. The edible material may comprise an aerated fat-based filling, such as an aerated chocolate composition, an aerated emulsion, or a mousse, for example.

Step d) may comprise depositing an edible material into at least one section such that at least a portion of at least one separating member adjacent at least one section has a height greater than that of the maximum height of the edible material. Step d) may comprise depositing the edible material into at least one section such that at least one separating member adjacent at least one section has a height greater than that of the maximum height of the edible material along its entire length. This may be particularly advantageous with less-viscous edible materials which may flow into at least one adjacent section where the separating member is not arranged to completely contain it within a section.

Step d) may comprise depositing an edible material into at least one section such that the edible material in at least one section protrudes to beyond (i.e. above) the maximum height of at least one adjacent separating member. In such embodiments, the edible material may still be substantially separated from an adjacent section if it possesses sufficient viscosity such that it can at least partially retain its shape. In such embodiments, the edible material may be substantially separated from an adjacent section for at least 3 seconds, 4 seconds 5, seconds, 6 seconds, 7 seconds, 8 seconds, 9 seconds, 10 seconds, 15 seconds, 20 seconds, 25 seconds, 30 seconds, 45 seconds, at least 60 seconds or at least 120 seconds, at least 180 seconds, at least 240 seconds or at least 300 seconds.

In some embodiments, at least two sections may be filled at substantially the same time and/or at the same filling station on a production line. In some embodiments, all sections to be filled are filled at substantially the same time and/or at the same filling station.

In some embodiments, at least two sections may be filled at different times. This may be the case where a confectionery shell is transported between filling stations on a production line in order to fill different sections at each station.

The section(s) without an edible material deposited therein may comprise unfilled sections.

The method may comprise forming at least 2, 3, 4 or at least 5 unfilled sections.

The method may comprise forming an unfilled section at one or both ends of the partially-filled confectionery shell.

The method will be adjusted so that the dimensions of the at least one separating member may be selected to achieve the desired separation between adjacent sections of the shell and/or edible materials within adjacent sections of the shell. For example, a separating member adjacent a section containing a highly-viscous material may not need to be as high compared to embodiments in which a less-viscous material is contained therein, as the highly-viscous material may be able to retain its shape for a time even if it protrudes above the separating member (in which case less confectionery material may be required to make the at least one separating member), whereas the less-viscous (e.g. liquid) edible material would not retain its shape, and would flow into an adjacent section of the shell.

The method may comprise forming the wall of the confectionery shell with a minimum thickness of at least 1 mm, 2 mm, 3 mm, 4 mm, 5 mm, 6 mm, 7 mm, 8 mm, 9 mm or at least 10 mm. The method may comprise forming the wall of the confectionery shell such that it has a substantially uniform thickness throughout a portion of the wall or throughout substantially the entire wall, or such that the thickness varies in different portions of the wall.

The method may comprise manufacturing a confectionery shell of any suitable shape, such as a hemisphere. In preferred embodiments, the method may comprise manufacturing a confectionery shell in the shape of a half-egg, the shape of which may be considered to be the shape obtained by splitting an egg in half symmetrically.

The method may further comprise the step of vibrating the mould after step a) but before step b), in order to remove any air bubbles within the solidifiable confectionery material, or to level the solidifiable confectionery material, before step b).

The method may further comprise a scraping step after step b) and/or step c) and either before or after step d), in order to remove excess confectionery material and/or edible material from the top of the mould cavity and/or shell. This may give a much cleaner finish to the edges of the shell. The scraping step may comprise scraping the rim of the shell to remove confectionery material and/or edible material therefrom, and/or may comprise scraping the top of at least one separating member to remove confectionery material and/or edible material therefrom.

The method may further comprise a cooling step after step b) and/or step c) which may be carried out before, during and/or after step d), wherein the mould cavity and/or the filled or unfilled confectionery shell is cooled. This cooling step may be carried out before, during and/or after the optional scraping step.

According to a second aspect not part of the invention there is provided a method of manufacturing an at least partially filled confectionery product comprising the steps of;
cold-stamping a confectionery shell comprising at least one separating member integrally formed with, and protruding from, the confectionery shell, the or each separating member defining a boundary between at least two sections of the confectionery shell;
filling at least one section to form an at least partially filled confectionery shell; and
sealing the at least partially filled confectionery shell to form the at least partially filled confectionery product.

Any reference below to a confectionery shell obtainable or obtained by steps a) - c) of the method of the first aspect of the invention, should be construed as meaning a confectionery shell which may comprise any of the features as described in relation to the confectionery shell obtained by the first aspect of the invention, but does not necessarily have the limitation of step d) (i.e. at least one filled section and at least one unfilled section), and indeed may or may not comprise any filling. The method used to form such a shell may be as described in relation to steps a) - c) of the method of the first aspect of the invention, and may also include any additional steps as described hereinabove, such as a vibration step, a scraping step and/or a cooling step(s).

The confectionery shell may be formed by steps a) to c) of the method of the fist aspect of the invention, and therefore the at least partially filled confectionery shell may comprise a confectionery shell obtainable or obtained by steps a) - c) of the method of the first aspect of the invention, which has at least one filled section.

The at least partially filled confectionery shell may comprise at least 2, at least 3, at least 4 or at least 5 filled sections and/or may comprise at least one unfilled section or at least 2 unfilled sections. The at least partially filled confectionery shell may comprise an unfilled section at one or both ends thereof.

The at least partially filled confectionery shell may be at least partially filled with an edible material. The edible material may be as described in relation to the first aspect of the invention.

The at least partially filled confectionery shell is considered to be sealed when the sections inside and/or at least a portion or all of the interior space of the at least partially filled confectionery shell is/are no longer open to, or in fluid communication with, the surrounding environment.

The at least partially filled confectionery shell and the component used to seal the at least partially filled confectionery shell, when joined together such that the at least partially filled confectionery shell is sealed, may together define an outer wall of the at least partially filled confectionery product.

In some embodiments, the method may comprise sealing the at least partially filled confectionery shell while it still resides within a mould cavity in which it was formed. In other embodiments, the method may comprise removing the at least partially filled confectionery shell from within a mould cavity in which it was formed before it is sealed. Being able to seal the at least partially filled confectionery shell without removing it from the mould cavity in which it was formed may be advantageous as it may reduce manufacturing complexity and/or cost.

In some embodiments, the method may comprise sealing the at least partially filled confectionery shell with a material suitable for food packaging, for example a food packaging-grade foil. In such embodiments, the method may comprise sealing the at least partially filled confectionery shell by applying a layer of packaging material to the open side of the at least partially filled confectionery shell, such as a layer of foil. The layer may be applied using an edible glue. In other embodiments, the method may comprise sealing the at least partially filled confectionery shell by partially or completely wrapping/packaging the at least partially filled confectionery shell. In preferred embodiments, the at least partially filled confectionery shell is wrapped sufficiently tightly to at least partially mitigate the edible material in one section entering an adjacent section - such embodiments will work more effectively when the at least one separating member protrudes substantially to the level of the shell rim along at least 90% of its length, but preferably along at least 95% of its length, most preferably along substantially 100% of its length, as this creates a more effective barrier between adjacent sections. However, the height of the separating member required will depend on the viscosity of the edible material, and so separating members with heights lower than the level of the shell rim may still keep more viscous edible materials contained in their respective sections, while substantially less-viscous (e.g. liquid) edible materials may require a higher separating member(s) in order to prevent them from entering an adjacent section(s).

In some embodiments, the method may comprise sealing the at least partially filled confectionery shell with a confectionery mass. In such embodiments, the method may comprise the steps of; 1) bringing the at least partially filled confectionery shell into contact with the confectionery mass; and 2) joining the at least partially filled confectionery shell and the confectionery mass at the point(s) of contact between them. Step 2) may comprise gluing the point(s) of contact to join the at least partially filled confectionery shell and confectionery mass together, for example with an edible glue, in which case the method would further comprise the step of applying edible glue to the edge(s) of the at least partially filled confectionery shell and/or confectionery mass before they are brought together. The method may comprise heating the point(s) of contact between the at least partially filled confectionery shell and the confectionery mass before and/or after they are brought into contact, and subsequently cooling them, so as to seal them together. The at least partially filled confectionery shell and confectionery mass may be joined or sealed together by book moulding.

In some embodiments, the method may comprise joining a confectionery mass and at least partially filled confectionery shell which form a male-to-female connection such as one part providing a stepped-in rim arranged to fit inside the other part. This allows the confectionery mass and at least partially filled confectionery shell to be joined together more securely and/or reliably.

In some embodiments, the confectionery mass may comprise an auxiliary confectionery mass, and the method may comprise sealing the at least partially filled confectionery shell with an auxiliary confectionery mass, for example by joining them together. An auxiliary confectionery mass may be any confectionery mass which does not comprise a confectionery shell obtainable or obtained by steps a) - c) of the method of the first aspect of the invention, or an at least partially filled confectionery shell comprising a confectionery shell obtainable or obtained by steps a) - c) of the method of the first aspect of the invention which is at least partially filled (such as a partially-filled confectionery shell obtainable or obtained by the method of the first aspect of the invention). Suitable auxiliary confectionery masses may include confectionery shells (filled, partially filled or unfilled) not obtained or obtainable by steps a) - c) or steps a) - d) of the method of the first aspect of the invention, solid confectionery bodies, hollow confectionery bodies (i.e. 3-dimensional confectionery bodies which comprise a cavity completely encapsulated by confectionery material, which may be filled, partially filled or unfilled), confectionery pieces or slabs or the like. The method may comprise sealing the at least partially filled confectionery shell with an auxiliary confectionery mass comprising a substantially planar surface, wherein compartments may be formed within the at least partially filled product between the planar surface and the sections within the shell. Edible materials within such compartments may be most-effectively separated from adjacent sections where the separating members substantially contact the planar surface (i.e. reach the level of the shell rim), preferably along their entire length, although a lower height may be adequate, depending on the viscosity of the edible material(s). The auxiliary confectionery mass may comprise a confectionery slab, such as a chocolate slab. The auxiliary confectionery mass is preferably shaped to closely match the profile and/or rim of the at least partially filled confectionery shell, so as to facilitate the sealing of the points of contact between them, such as by facilitating application of heat to the areas of contact, for example during book moulding.

In some embodiments, the confectionery mass may comprise a second filled, partially filled, or unfilled confectionery shell comprising a confectionery shell obtainable or obtained by steps a) - c) of the method of the first aspect of the invention, which may be a partially-filled confectionery shell obtainable or obtained by the method of the first aspect of the invention. Such embodiments will be referred to herein as "dual shell" embodiments.

In some embodiments, the second confectionery shell (obtainable or obtained by steps a) - c) of the method of the first aspect of the invention) is at least partially filled, the method therefore comprising the steps of providing two at least partially filled confectionery shells comprising confectionery shells obtainable or obtained by steps a) - c) of the method of the first aspect of the invention; and sealing the two at least partially filled confectionery shells together.

In other embodiments, the second confectionery shell (which may be obtainable or obtained by steps a) - c) of the method of the first aspect of the invention) is unfilled, and the method therefore comprises the steps of providing an at least partially filled confectionery shell comprising a confectionery shell obtainable or obtained by steps a) - c) of the method of the first aspect of the invention and an unfilled confectionery shell comprising a confectionery shell obtainable or obtained by steps a) - c) of the method of the first aspect of the invention; and sealing the two confectionery shells together.

The shells may be sealed together while one or both shells are still within their respective mould cavity, or one or both shells may be removed from within their respective mould cavities before they are sealed together.

In some embodiments, the method may comprise joining two shells (which may be two at least partially filled shells, or one at least partially filled shell and one unfilled shell) comprising shells obtainable or obtained by steps a) - c) of the method of the first aspect of the invention which comprise substantially the same spatial arrangement of separating members and sections such that they align when the shells are brought together. In such embodiments, sections in the respective shells, when brought together, form a common section within the at least partially filled product, and will be referred to herein as "corresponding" sections. In such embodiments wherein corresponding sections both comprise a filling, when the shells are joined together, the edible materials of the fillings in the corresponding sections of each at least partially filled confectionery shell may meet, and may at least partially mix and/or settle, and form a common "layer" of edible material within the at least partially filled confectionery product.

In embodiments wherein only one section of a pair of corresponding sections comprises a filling, the filling within one section may at least partially flow into the opposing unfilled corresponding section to form a common layer of filling within the section of the at least partially filled product formed by the corresponding sections. In such embodiments, the filling may flow or settle such that it is distributed substantially evenly between the corresponding sections and/or may settle to form a substantially level layer within the at least partially filled product. In such embodiments, it may be advantageous to use an at least partially filled shell wherein the separating member(s) adjacent the filled corresponding section of the pair (i.e. where the opposing corresponding section is unfilled) protrudes beyond the rim of the shell and/or wherein the filling within the filled corresponding comes to above the maximum height of the separating member(s) (where the filling is sufficiently viscous), in order to increase the amount of filling within the formed layer within the at least partially filled product.

The above embodiments therefore provide a method of manufacturing a layered (the layers may be a layer of edible material(s)/filling(s) or an unfilled layer) confectionery product more easily than by prior art methods, as it can be achieved by manufacturing two confectionery shells by a simple cold-stamping process (such as by the method of steps a) - c) of the method of the first aspect of the invention), and may be further advantageous as the cold-stamped shells may subsequently be easily joined together, for example by a simple book moulding process.

In preferred embodiments, the method comprises joining two confectionery shells (which may be two at least partially filled shells, or one at least partially filled shell and one unfilled shell) comprising two substantially identical shells obtainable or obtained by steps a) - c) of the method of the first aspect of the invention (i.e. two shells that can be formed from the same mould cavity /stamp arrangement and/or the same production run/line - this may be particularly advantageous as it may reduce manufacturing complexity and/or cost).

The shells may comprise identical type and optionally amounts of filling(s) between corresponding sections of the shells. In such embodiments, when the shells are brought together (and therefore the corresponding sections of each shell are brought together), a substantially homogenous layer of edible material is formed in a section of the final at least partially filled confectionery product formed from two corresponding sections of the individual at least partially filled confectionery shells.

In some embodiments, the type of edible material in corresponding sections between each shell may differ such that when the corresponding sections are brought together the different edible material may mix and/or react to form a mixed edible material.

In some embodiments, a section at one end of the at least partially filled confectionery product is unfilled such that the method comprises manufacturing an at least partially filled confectionery product comprising an unfilled section or airspace at one end. This may be achieved by, for example, joining two at least partially filled confectionery shells (comprising shells obtainable or obtained by steps a) - c) of the method of the first aspect of the invention), each comprising a corresponding unfilled section at one end. Formation of an unfilled section or airspace at one end of the at least partially filled confectionery product may be advantageous as it allows the at least partially filled confectionery product to be stood up such that a "headspace" is formed at the top of the product. In this way, an at least partially filled confectionery product (which may consist of a product with multiple layers of edible material, or a single layer of edible material, or any other arrangement) with a headspace (comprising an unfilled area/section at the top end of the product) can be manufactured easily, efficiently and cost-effectively by cold-stamping methods, while also providing a further advantage of allowing great control over the volume and shape of the headspace of the filled product, and the level of filling of the at least partially filled product, through simple adjustment of the properties/dimensions/location of the separating members.

The length of time it takes for any edible material in corresponding sections to mix, distribute and/or settle within the at least partially filled confectionery product may depend upon the viscosity of the edible material(s), the temperature of the edible material(s) and/or the amount of shaking of/forces exerted on the at least partially filled confectionery product. The method may further comprise the step of shaking, vibrating or agitating the at least partially filled confectionery product in order to at least partially mix, settle and/or distribute any edible material(s) or layer(s) of edible material(s).

It may be desirable to keep any formed layers of edible material substantially separate (i.e. stop them from meeting or touching each other), in which case, it may be desirable to utilise corresponding separating members which meet in the middle (i.e. their top edges come together and substantially contact each other in the at least partially filled confectionery product) along the majority of their length, but preferably their whole length, so as to effectively completely separate one layer from another within the at least partially filled confectionery product. This may be accomplished by, for example, utilising two confectionery shells with corresponding separating members (i.e. separating members adjacent respective corresponding sections of the two shells) with top edges that reach the level of the rim of their respective shells (in which case, two identical shells may be used, which may be advantageous as it may reduce manufacturing complexity and cost as they can both be manufactured with the same mould/stamp arrangement and/or on the same production run/line), or may be accomplished by utilising one shell which comprises at least one separating member comprising at least one protruding portion that protrudes to beyond the level of its respective shell rim, and a second shell which comprises a corresponding separating member(s) comprising a corresponding recessed portion(s) that does not reach the level of its respective shell rim, the recessed portion(s) and protruding portion(s) being matched in shape so as to "slot" together.

However, depending on the viscosity of a layer of edible material, it may be possible to keep the layer from entering another section and/or contacting another edible material layer by utilising separating members which do not substantially contact one another, but instead leave a gap along at least a portion of their length, that is to say, that edible materials with a higher viscosity may not be able to flow through such a gap. The gap may be at least 0.5 mm, 1 mm, 1.5 mm, 2 mm, 3 mm, 4 mm or 5 mm and/or no more than 0.5 mm, 1 mm, 1.5 mm, 2 mm, 3 mm, 4 mm or 5 mm.

In other embodiments, it may be desirable or allowable for at least two layers of edible material to meet/touch and/or at least partially mix, in which case corresponding separating members which leave a gap (and a larger gap for more viscous materials, depending on its viscosity and the desired level or speed of mixing) may be desirable, to allow mixing. However, if the material is less viscous, a relatively small gap may suffice. By controlling the position, shape and size of the gap between corresponding separating members, it is possible to control the level, speed and/or location of mixing of edible materials in adjacent sections.

It should be noted, however, that due to the fact that the separating members may not be sealed together in some embodiments, there may still be a (very small) gap in between corresponding separating members which substantially contact each other. In other embodiments, however, the top edge or rim of corresponding separating members may be joined or sealed together, such as by heating the point(s) of contact between them before they are brought into contact or close proximity, and subsequently allowing them to cool (this may be in addition to the sealing together of the walls of the shells). Therefore, the method may comprise joining or sealing (such as book moulding) the walls of the shells and at least one pair of corresponding separating members.

In other embodiments, two layers may be arranged to meet and/or at least partially mix upon breakage or rupture of the separating member(s) which define the boundary between the sections in which each layer resides. In such embodiments, said separating member(s) may be made particularly thin so as to break or rupture more easily, wherein the thickness may be adjusted so as to control at what stage they break or rupture, for example if they are particularly thin then they may break or rupture during packaging or during transit, or they may be made thicker so that they remain intact until they are broken or ruptured by a consumer.

In some embodiments, the method may comprise joining two at least partially filled shells comprising confectionery shells obtainable or obtained by steps a) - c) of the method of the first aspect of the invention which comprise different arrangements of separating members and sections. In such embodiments, at least partially filled products may be obtained with a large variety of filling arrangements, by joining two shells produced by simple cold-stamping methods.

In some embodiments, the method may comprise joining two at least partially filled confectionery shells comprising shells obtainable or obtained by steps a) - c) of the method of the first aspect of the invention, wherein at least one shell comprises at least one separating member which protrudes to beyond the level of the rim of its corresponding shell along at least a portion of its length, such as along at least 30% of its length. Such portions may be arranged to match or fit into recesses formed by areas of a corresponding separating member in the other shell which don't reach the level of the rim of said shell. In this way, portions of a separating member in one shell which extend past the level of that shell's rim may "slot" into recesses formed along the length of a corresponding separating member in the other shell. In such embodiments, the separating members may be arranged to substantially meet or may be arranged such that there is a substantial gap therebetween, such as a gap of at least 0.5 mm, 1 mm, 1.5 mm, 2 mm, 3 mm, 4 mm or 5 mm and/or no more than 0.5 mm, 1 mm, 1.5 mm, 2 mm, 3 mm, 4 mm or 5 mm.

In some embodiments, the at least partially filled confectionery shell may comprise at least one separating member which protrudes from the shell to a maximum height of 5%, 10%, 15%, 20%, 25% or 30% towards the shell rim. In such embodiments, the relatively small separating member(s) may still be able to keep substantially viscous fillings substantially separated from adjacent sections at least for a minimum period of time, which may be, for example, enough time to allow the at least partially filled confectionery shell to be sealed before an undesirable amount of mixing and/or overflow of filling(s) occurs.

In preferred embodiments, the method may comprise joining two at least partially filled confectionery shells comprising shells obtainable or obtained by steps a) - c) of the method of the first aspect of the invention, wherein at least one shell comprises at least one separating member (preferably all separating members) which protrudes from the shell to a maximum height of 5%, 10%, 15%, 20%, 25% or 30% towards the shell rim.

In especially preferred embodiments, the method may comprise joining two at least partially filled confectionery shells comprising shells obtainable or obtained by steps a) - c) of the method of the first aspect of the invention, wherein both shells comprise at least one separating member (preferably all separating members) which protrudes from the shell to a maximum height of 5%, 10%, 15%, 20%, 25% or 30% towards the shell rim. In such embodiments, fillings in corresponding sections may be kept separated from adjacent sections (such as an empty section which may be at one end of one or both shells) for long enough to allow the shells to be sealed together before an undesirable amount of mixing and/or overflow of filling(s) occurs within each shell. Fillings in corresponding sections are still therefore able to meet and at least partially mix to form a common layer(s) within the at least partially filled confectionery product, while the product only comprises at least one relatively small separating member, such that it may not be noticed by the consumer and/or may not significantly obstruct access to the layer(s) of filling.

In some embodiments, the method may comprise sealing an at least partially filled confectionery shell with two or more of the abovementioned packaging materials and/or confectionery masses. For example, 3, 4 or more at least partially filled or unfilled (at least one being at least partially filled) confectionery shells comprising confectionery shells obtainable or obtained by steps a) - c) of the method of the first aspect of the invention may be sealed together ("multi-shell" embodiments). In another example, 2 or more at least partially filled confectionery shells comprising confectionery shells obtainable or obtained by steps a) - c) of the method of the first aspect of the invention may be sealed to one or more auxiliary confectionery masses, such as 2 at least partially filled confectionery shells sealed to opposing sides of a confectionery slab, or 2 at least partially filled confectionery shells and 2 hollow or solid confectionery bodies sealed together that form a quarter each of a whole at least partially filled confectionery product. Many other variations are possible as may be envisaged by the skilled person, and fall within the scope of the invention as described and claimed herein.

In some embodiments, the method may comprise manufacturing an at least partially filled confectionery product wherein at least one separating member is frangible. In such embodiments, the at least one frangible separating member may be configured to break or rupture during packaging or during transit. In other embodiments, the at least one frangible separating member may be configured to remain substantially intact until it is broken or ruptured by a consumer. It will be appreciated that the thickness of the at least one separating member (or portions thereof - thereby creating thinner areas which act as weaker areas or inherent points of weakness) may be varied in order to control the strength of the at least one separating member, and thereby control the point at which it breaks or ruptures.

In some embodiments, the method may comprise manufacturing an at least partially filled confectionery product comprising a removable portion. The removable portion may comprise a breakable portion. The breakable portion may comprise a portion of the overall outer wall of the at least partially filled confectionery product enclosed by a natural line of weakness, such as a break line. The break line may comprise an area of thinner confectionery material. The removable portion may be formed when the at least partially filled confectionery shell and at least one confectionery mass are joined together, for example when two or more shells comprising confectionery shells obtainable or obtained by steps a) - c) of the method of the first aspect of the invention are joined together. In such embodiments, the method may comprise joining a first at least partially filled confectionery shell obtainable or obtained by steps a) - c) of the method of the first aspect of the invention with a confectionery mass (such as a second at least partially filled confectionery shell), wherein the first filled confectionery shell and the confectionery mass each comprise a portion of the removable portion and/or break line which line up when they are brought together to form the removable portion of the at least partially filled confectionery product. The method may comprise manufacturing an at least partially filled confectionery product comprising a breakable portion comprising a removable portion which may be removed once broken at the break line, such as a lid.

In preferred embodiments, the method may comprise manufacturing an at least partially filled confectionery product comprising a removable portion which encloses at least a portion of an airspace or headspace (which may be as discussed hereinabove) within the at least partially filled product. Such embodiments may be particularly advantageous as they allow the removable portion to be broken off and removed without any mess which may have otherwise resulted if there was an edible material enclosed by the removable portion.

Removing the removable portion may allow access to the contents (including the edible material(s)) of the at least partially filled confectionery product, without having to break any other part of the at least partially filled confectionery product. The opening thus created may provide access to the contents of the at least partially filled confectionery product by means of a utensil, such as a spoon or the like, for example, or by means of a dipping member, which may be dipped into the edible material.

The dipping member may be an edible dipping member. The edible dipping member may comprise a biscuit, wafer or breadstick or the like, for example.

In some embodiments, the dipping member may comprise a human finger.

Embodiments where the contents of the at least partially filled confectionery product are accessed by a utensil or a dipping member may comprise at least one frangible separating member arranged to be broken or ruptured by said utensil or dipping member. In such embodiments, a layer or section of edible material may be consumed, followed by breakage or rupture of the underlying separating member(s), which allows access to the next layer or section of edible material.

In dual-shell or multi-shell embodiments in which the two or more constituent shells possess the same separating member arrangement, corresponding sections of the shells may form sections within the at least partially filled product, and edible materials/fillings within such a formed section may form layers within the at least partially filled product. These layers may remain completely separated or may at least partially mix or meet depending on the configuration of the separating members. The viscosity of the edible material and/or the height of the separating members of the corresponding confectionery shells may be varied in order to control this.

The method may comprise joining an at least partially filled confectionery shell in the form of a half-egg shaped, at least partially filled, confectionery shell to a confectionery mass in the form of a half-egg shaped, at least partially filled, or unfilled, confectionery shell in order to form an egg-shaped at least partially filled confectionery product. One, but preferably both, of the half-egg shaped confectionery shells may be obtainable or obtained by steps a) - c) of the method of the first aspect of the invention. In preferred embodiments, the method may comprise manufacturing an at least partially filled confectionery egg comprising the step of joining two substantially identical egg-shaped confectionery shells (obtainable or obtained by steps a) - c) of the method of the first aspect of the invention), wherein at least one section of at least one shell is filled. In especially preferred embodiments, the half-egg shaped shells may comprise the same type, and optionally amount, of filling (edible material) within corresponding sections, and even more preferably may comprise unfilled corresponding sections at one end such that the at least partially filled confectionery egg comprises a headspace or airspace (comprising a substantially unfilled section) at a top end thereof.

The above discussion equally relates to embodiments wherein one or both confectionery shells comprises a partially-filled confectionery shell obtainable or obtained by the method of the first aspect of the invention (i.e. where at least one section of the shell is filled and at least one section is unfilled). Filled sections and/or unfilled sections of a partially-filled confectionery shell may therefore form part of a pair of corresponding sections along with another filled and/or unfilled section in another shell (which may be a partially-filled shell from the first aspect of the invention, or an at least partially filled or unfilled shell comprising a confectionery shell obtainable or obtained by steps a) - c) of the method of the first aspect of the invention) to form a common section and/or layer of edible material within the formed at least partially filled confectionery product.

In preferred embodiments, the method comprises joining two partially-filled shells obtainable or obtained by the method of the first aspect of the invention, wherein both shells comprise an unfilled section at the same end, such that when the shells are brought together, said unfilled corresponding sections form an unfilled section at one end of the at least partially filled confectionery product, which is preferably the top end (i.e. it comprises a headspace within the at least partially filled product).

In some embodiments, the at least partially filled confectionery shell may comprise at least one separating member which extends beyond the rim of the shell along at least a portion of its length (such as the entirety of its length) and the method may comprise sealing the at least partially filled confectionery shell with a second confectionery shell which does not comprise at least one corresponding separating member. In such embodiments, the at least one separating member of the at least partially filled confectionery shell which does not have a corresponding separating member in the second shell may be arranged to come into close proximity with (as close as desired) or to substantially contact the wall of the second confectionery shell, and may be sealed thereto (in addition to sealing the walls of the shells themselves).

According to a third aspect not part of the invention there is provided an apparatus for manufacturing a confectionery shell comprising;
a mould comprising a mould cavity arranged to receive a solidifiable confectionery material, in use; and
a stamp arranged to be pressed into the solidifiable confectionery material within the mould cavity and configured to form at least one separating member integral with and protruding from the confectionery shell which defines a boundary between at least two sections of the confectionery shell.

According to a fourth aspect not part of the invention there is provided a stamp for forming a confectionery shell, the stamp comprising an outer surface corresponding to the shape of a confectionery shell, and at least one area configured to form at least one separating member integral with and protruding from the confectionery shell which defines a boundary between at least two sections of the confectionery shell.

The stamp may be as described hereinabove for the first aspect of the invention.

The stamp may comprise part of the apparatus of the third aspect.

According to a fifth aspect of the invention there is provided a partially-filled confectionery shell comprising at least one separating member integrally formed with, and protruding from, the confectionery shell, the or each separating member defining a boundary between at least two sections of the confectionery shell, wherein at least one section is filled and at least one section is unfilled.

The partially-filled confectionery shell may be a cold-stamped confectionery shell.

The partially-filled confectionery shell may be obtainable or obtained by, and as described in relation to, the method of the first aspect of the invention. The partially-filled confectionery shell may be obtained using an apparatus of the third aspect of the invention.

According to a sixth aspect not part of the invention there is provided an at least partially filled confectionery product comprising at least two interior sections, each section being separated from adjacent sections by at least one separating member integrally formed with and protruding from the wall of the product, wherein at least one section comprises an edible material.

The at least partially filled confectionery product may be obtainable or obtained by, and as described in relation to, the methods of the first, second, eighth or ninth aspects.

According to a seventh aspect not part of the invention there is provided a stamp for use in forming a confectionery shell by cold-stamping, the stamp being arranged to be pressed into a solidifiable confectionery material within a mould cavity and configured to form at least one separating member integral with and protruding from the confectionery shell which defines a boundary between at least two sections of the confectionery shell, in use.

The stamp may be used in, and be as described in relation to, the method of the first or other aspects of the invention. The stamp may comprise part of the apparatus of the third aspect.

According to an eighth aspect not part of the invention there is provided a method of manufacturing an at least partially filled confectionery product comprising the steps of;
providing a first at least partially filled confectionery shell and a second at least partially filled, or unfilled, confectionery shell, wherein each shell comprises at least one separating member integrally formed with, and protruding from, the confectionery shell, the separating member defining a boundary between at least two sections of the confectionery shell, and wherein at least one section of each shell comprises a filling; and
joining the confectionery shells to form the at least partially filled confectionery product.

The confectionery shells may comprise confectionery shells obtainable or obtained by steps a) - c) of the method of the first aspect of the invention. One or both of the confectionery shells may comprise partially-filled confectionery shells obtainable or obtained by the method of the first aspect of the invention.

The method may comprise the method (or features thereof) as described in relation to the second aspect of the invention, insofar as to the features discussed in relation to the method of the second aspect of the invention which are not exclusive to non-dual-shell embodiments.

According to a ninth aspect not part of the invention there is provided a method of manufacturing a partially-filled confectionery shell comprising the steps of;
a) depositing a solidifiable confectionery material into a mould cavity;
b) moulding the solidifiable confectionery material within the mould cavity to form a confectionery shell;
c) forming at least one separating member integral with and protruding from the confectionery shell which defines a boundary between at least two sections of the confectionery shell, wherein at least one separating member protrudes into the shell to no more than 50% of the height of the shell rim; and
d) depositing an edible material into at least one section of the confectionery shell to form a partially-filled confectionery shell, wherein the at least one separating member prevents at least a portion of the edible material within a section from entering an adjacent section.

The method may be substantially as described for the method of the first aspect of the invention, except that in some embodiments all sections may be filled, and that there must be at least one separating member that protrudes into the shell to no more than 50% of the height of the shell rim.

In some embodiments, the method may comprise forming at least 2, 3, 4, 5, 6, 7, 8, 9, or at least 10 separating members which protrude into the shell to no more than 50% of the height of the shell rim, and/or no more than 2, 3, 4, 5, 6, 7, 8, 9, or no more than 10 separating members which protrude into the shell to no more than 50% of the height of the shell rim. In some embodiments, each separating member may protrude into the shell to no more than 50% of the height of the shell rim.

In some embodiments, the method may comprise forming at least 1, 2, 3, 4, 5, 6, 7, 8, 9, or at least 10 separating members which protrude into the shell to no more than 45%, 40%, 35%, 30%, 25%, 20%, 15%, 10% or no more than 5% of the height of the shell rim, and/or no more than 1, 2, 3, 4, 5, 6, 7, 8, 9, or no more than 10 separating members which protrude into the shell to no more than 45%, 40%, 35%, 30%, 25%, 20%, 15%, 10% or no more than 5% of the height of the shell rim. In some embodiments, each separating member may protrude into the shell to no more than 45%, 40%, 35%, 30%, 25%, 20%, 15%, 10% or no more than 5% of the height of the shell rim.

In some embodiments, the method may comprise forming at least 1, 2, 3, 4, 5, 6, 7, 8, 9, or at least 10 separating members which protrude into the shell to at least 45%, 40%, 35%, 30%, 25%, 20%, 15%, 10% or at least 5% of the height of the shell rim, and/or no more than 1, 2, 3, 4, 5, 6, 7, 8, 9, or no more than 10 separating members which protrude into the shell to at least 45%, 40%, 35%, 30%, 25%, 20%, 15%, 10% or at least 5% of the height of the shell rim. In some embodiments, each separating member may protrude into the shell to at least 45%, 40%, 35%, 30%, 25%, 20%, 15%, 10% or at least 5% of the height of the shell rim.

In preferred embodiments at least one separating member protrudes no more than 30% of the height of the shell rim.

The partially-filled shell may be sealed by a method of the second aspect of the invention.

### Detailed Description of the Invention

In order that the invention may be more clearly understood one or more embodiments thereof will now be described, by way of example only, with reference to the accompanying drawings, of which:
- Figure 1: illustrates a cross-section of an embodiment of the method, apparatus and stamp of the first, third, fourth and seventh aspects, at the stage before the stamp is pressed into the mould cavity.
- Figure 2: illustrates a cross-section of an embodiment of the method, apparatus and stamp of the first, third, fourth and seventh aspects, at the stage of cold-stamping.
- Figure 3: illustrates a cross-section of an embodiment of the method, apparatus and stamp of the first, third, fourth and seventh aspects,
at the stage after removal of the stamp from the mould cavity following cold-stamping.
- Figure 4: illustrates a cross-section of an embodiment of an at least partially filled confectionery shell for use in the method of the second aspect,
in the form of a partially filled confectionery shell formed by an embodiment of the method of the first aspect of the invention, steps a) to c) of which are illustrated in Figures 1-3.
- Figure 5: illustrates a cross-section of a second embodiment of an at least partially filled confectionery shell for use in the method of the second aspect, in the form of a partially-filled confectionery shell formed by an embodiment of the method of the first aspect of the invention.
- Figure 6: illustrates a cross-section of an embodiment of an at least partially filled confectionery product of the sixth aspect, immediately after having been formed by an embodiment of the method of the second or eighth aspect, from two of the at least partially filled confectionery shells illustrated in Figure 5.
- Figure 7: illustrates a cross-section of the embodiment of Figure 6, after settling of the edible material layer.
- Figure 8: illustrates a cross-section of a partially-filled confectionery shell formed by an embodiment of the method of the first or ninth aspect.
- Figure 9: illustrates a cross-section of an embodiment of an at least partially filled confectionery product of the sixth aspect, immediately after having been formed by a further embodiment of the method of the second or eighth aspect from two of the partially-filled confectionery shells illustrated in Figure 8.
- Figure 10: illustrates a cross-section of an at least partially filled confectionery shell for use in a yet further embodiment of the method of the second aspect, in the form of half a Cadbury Dairy Milk Caramel chocolate bar.
- Figure 11: illustrates a cross-section of an at least partially filled confectionery product of the sixth aspect which has been formed by an embodiment of the method of the second aspect involving the at least partially filled confectionery shell illustrated in Figure 10.

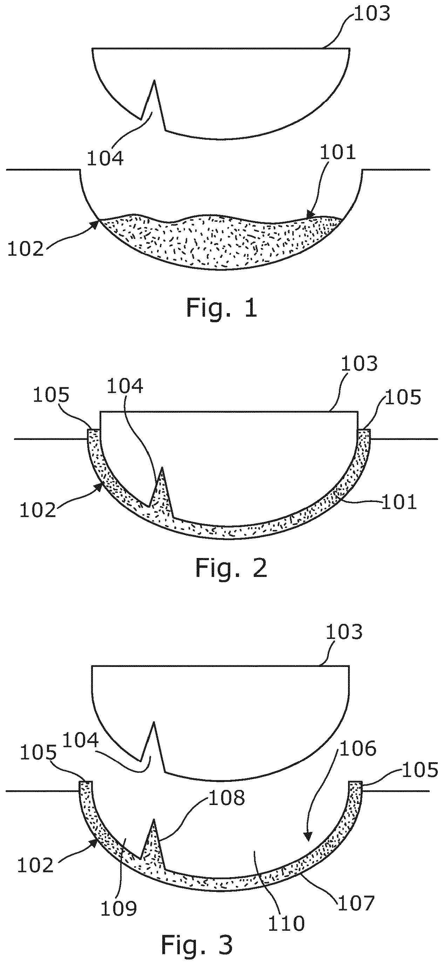

Figures 1-3 illustrates a cross-section of an embodiment of the method of the first aspect of the invention, using an embodiment of the apparatus and stamp of the third, fourth and seventh aspects, and will be discussed together.

As can be seen in Figure 1, a solidifiable confectionery material in the form of a liquid (molten) chocolate composition 101 is deposited into a curved mould cavity 102. A stamp 103 comprising a single stamp body is shown located over the mould cavity 102, ready to be used for cold-stamping (and so already sufficiently cooled, for example to -5 °C), and comprises a cavity (recess) 104.

The next step in the process is illustrated in Figure 2, whereby the stamp 103 is quickly pressed down into the mould cavity 102, which forces the liquid chocolate composition 101 to fill the space between the surface of the mould cavity 102 and the stamp 103 and to flow into and fill the cavity 104 within the stamp 103, while simultaneously rapidly cooling the chocolate composition 101 in order to at least partially solidify it. The chocolate composition 101 is also forced partially out of the mould cavity at positions 105, although in other embodiments, the amount of such overflow may be reduced, for example by reducing the amount of solidifiable confectionery material used, or forming a thicker shell and/or separating member(s) from the same amount of solidifiable confectionery material.

As shown in Figure 3, the stamp 103 is then removed from the mould cavity 102, which leaves behind a confectionery shell in the form of a chocolate shell 106 within the mould cavity 102. The chocolate shell 106 comprises a wall 107 and a separating member 108 integrally formed with the wall 107 of the shell 106 and formed of the same confectionery material (i.e. the same chocolate composition 101). The separating member 108 forms a boundary between two distinct sections 109, 110 within the shell 106. The chocolate shell 106 and/or the mould cavity 102 may optionally undergo an additional cooling step, which may be performed before and/or after an additional optional step of deposition of at least one edible material into at least one section 109, 110 of the shell, in order to achieve the desired shell solidity. The shell 106 may also undergo a scraping step to remove the at least partially solidified overflow portions 105, which may be performed before and/or after optional deposition of at least one edible material and before, during and/or after the optional additional cooling step.

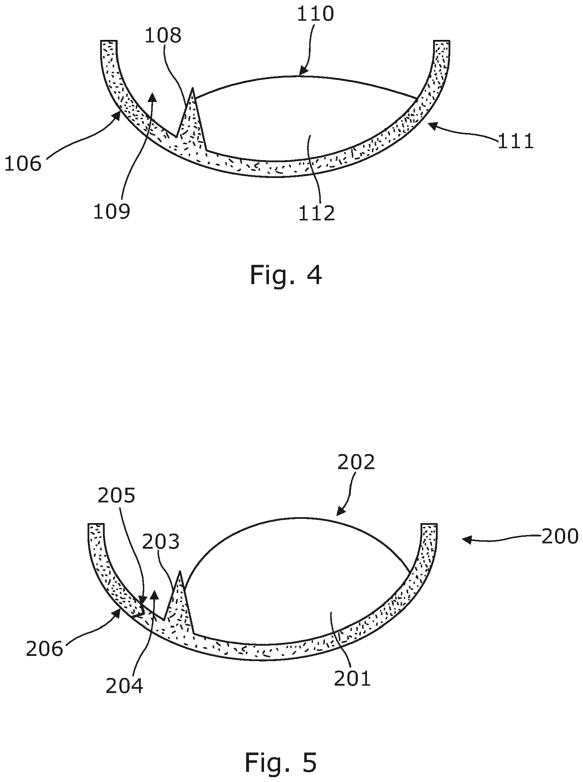

The chocolate shell 106 is then filled by depositing an edible material into at least one of the sections 109, 110. Figure 4 illustrates a cross-section of an embodiment of an at least partially filled confectionery shell for use in the method of the second aspect, in the form of a partially-filled chocolate shell 111 formed by an embodiment of the method of the first aspect of the invention (steps a) to c) of which are illustrated in Figures 1-3) comprising a chocolate shell 106. The partially-filled chocolate shell 111 comprises the chocolate shell 106 of Figure 3 after an edible material 112 has been deposited into one section 110. The edible material 112 is prevented from entering the adjacent section 109 by the separating member 108, which has a greater height than the edible material 112.

Figure 5 illustrates a cross-section of a second embodiment of an at least partially filled confectionery shell for use in the method of the second, in the form of a partially-filled chocolate shell 200formed by an embodiment of the method of the first aspect of the invention. As can be seen in Figure 5, the partially-filled chocolate shell 200 comprises a confectionery shell in the form of a chocolate shell 206 and a separating member 203 integrally formed with the shell 206 which defines a boundary between two distinct sections 202, 204 of the shell 206. An edible material 201 is located in one section 202 of the chocolate shell 206 such that it has a greater height than the separating member 203. The edible material 201 is sufficiently viscous such that it does not immediately flow over or around the separating member 203 into the adjacent section 204. The length of time that the edible material 201 will be prevented from entering the adjacent section 204 depends on the viscosity of the edible material 201. The more viscous the edible material 201, the longer it will take for it to at least partially flow into the adjacent section 204. The partially-filled chocolate shell 200 also comprises a break line 205 comprising a line of thinner chocolate. The break line 205 extends around the shell from one end of the rim to the other.

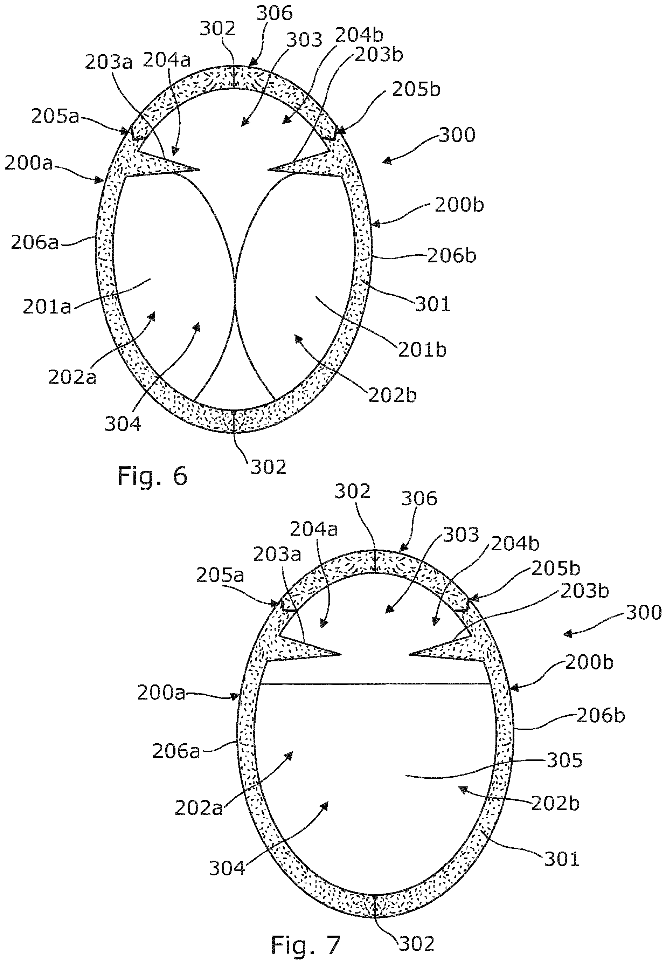

Figures 6 and 7 illustrate a cross-section of an embodiment of an at least partially filled confectionery product of the sixth aspect of the invention, in the form of a partially-filled chocolate egg 300, which has been formed from two partially-filled chocolate shells 200a, 200b comprising two of the partially-filled chocolate shell 200 as described in relation to, and illustrated by, Figure 5. As such, one partially-filled chocolate shell, and features originating therefrom, are suffixed with an "a", and the other partially-filled chocolate shell, and features originating therefrom, are suffixed with a "b". The partially-filled chocolate egg 300 comprises an outer wall 301 formed from the walls 206a, 206b of the shells 200a, 200b joined at their rims (illustrated by join lines 302). Integrally formed with, and protruding from, the outer wall 301 are separating members 203a, 203b. The separating members define corresponding sections 202a, 202b, and 204a, 204b. Corresponding sections 204a, 204b form an upper section 303 of the partially-filled chocolate egg 300 and corresponding sections 202a, 202b form a lower section 304 of the partially-filled chocolate egg 300. The upper section 303 is unfilled and comprises a headspace. The lower section 304 contains edible materials 201a, 201b. As the egg 300 shown in Figure 6 is shown immediately following the joining together of the two partially-filled chocolate shells 200a, 200b, the edible materials 201a, 201b which were present in the starting partially-filled chocolate shells 200a, 200b have just been brought together and have met in the middle. Over time, the edible materials 201a, 201b will begin to mix and/or settle within the egg 300, thus forming a mass of edible material 305 within the lower section 304, which can be considered as a single mass or layer, as can be seen in Figure 7. The length of time it takes for the edible materials 201a, 201b to mix and settle within the egg 300 may depend upon the viscosity of the edible materials 201a, 201b, the temperature of the edible materials 201a, 201b, and/or the amount of shaking of/forces exerted on the partially-filled chocolate egg 300. The partially-filled chocolate egg 300 also comprises a removable portion 306 which is formed where two break lines 205a, 205b of the partially-filled confectionery shells 200a, 200b have been brought together to form a continuous break line around the circumference of the egg, such that the continuous break line encircles and thus defines the removable portion 306. The removable portion 306 is arranged to surround a portion of the headspace defined by the upper section 303, which allows it to be removed with very little mess. The separating members 203a, 203b may be frangible and suitably thin so that they break or rupture during packaging or during transit. In other embodiments, the separating members 203a, 203b may be thick enough so that they do not break or rupture during packaging or transit, but remain intact until they can be broken or ruptured by a consumer. A consumer may therefore be able to remove the removable portion 306 and break or rupture the frangible separating members 203a, 203b, for example by means of a utensil, such as a spoon, or by means of a dipping member, such as a breadstick, biscuit or wafer, for example.

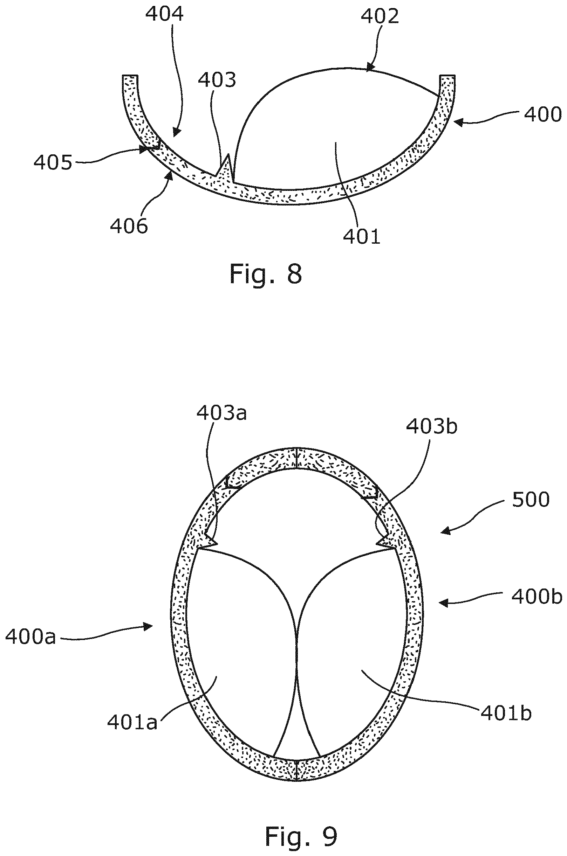

Figure 8 illustrates a cross-section of a partially-filled confectionery shell 400 formed by an embodiment of the method of the first or ninth aspect. The partially-filled confectionery shell 400 comprises a confectionery shell in the form of a chocolate shell 406 and a separating member 403 integrally formed with the shell 406 which defines a boundary between two distinct sections 402, 404 of the shell 406. The separating member 403 protrudes into the shell to no more than 30% of the height of the shell rim and an edible material 401 is located in one section 402 of the chocolate shell 406 such that it has a greater height than the separating member 403. The partially-filled chocolate shell 400 also comprises a break line 405 comprising a line of thinner chocolate. The break line 405 extends around the shell from one end of the rim to the other.

Although the separating member 403 only protrudes to no more than 30% towards the height of the shell rim (and so is quite a small feature), the edible material 401 is sufficiently viscous such that it does not immediately flow over or around the separating member 403 into the adjacent section 404. The length of time that the edible material 401 will be prevented from entering the adjacent section 404 depends on the viscosity of the edible material 401. The more viscous the edible material 401, the longer it will take for it to at least partially flow into the adjacent section 404. Therefore, the viscosity of the edible material 401 may be tailored for a particular purpose or manufacturing process, depending on, for example, how long and/or to what degree it is desirable or desired for the edible material 401 to be separated from the adjacent section 401. An example of a viscous material that could be deposited into the section 402 of the shell is aerated fat-based fillings, such as mousse, which may be chocolate mousse.

Advantages of smaller separating members include that the feature may not be noticed by a consumer, may not restrict access to the layer(s) of filling inside the product (especially when accessed through a frangible or removable portion), they may be less prone to unwanted breakage than longer separating members of similar or identical thickness (which may reduce or prevent breakage before it reaches the consumer if this is undesirable and/or may decrease manufacturing complexity), and that they require less material to make (which reduces cost of manufacture).

Figure 9 illustrates a cross-section of an embodiment of an at least partially filled confectionery product 500 of the sixth aspect, in the form of a partially-filled chocolate egg 500 immediately after having been formed from two of the partially-filled confectionery shells 400a and 400b illustrated in Figure 8 by a further embodiment of the method of the second or eighth aspect. As such, one partially-filled chocolate shell, and features originating therefrom, are suffixed with an "a", and the other partially-filled chocolate shell, and features originating therefrom, are suffixed with a "b".

The chocolate egg 500 comprises two partially-filled chocolate shells 400a, 400b which have been joined together at their rims. Integrally formed with, and protruding from, their respective shells 400a, 400b are separating members 403a, 403b. The edible materials 401a, 401b which were present in the starting partially-filled chocolate shells 400a, 400b have just been brought together and have met in the middle. Over time, the edible materials 401a, 401b will begin to mix and/or settle within the egg 500, in substantially the same way as described in relation to Figures 6 and 7.

The chocolate egg 500 is substantially the same as the chocolate egg 300 illustrated in Figure 6, described hereinabove, except that the separating members 403a, 403b of the chocolate egg 500 are smaller due to the fact that the separating members 403a, 403b of the corresponding shells 400a, 400b protrude to no more than 30% towards their respective shell's rim. The separating members 403a, 403b are therefore more minor, less noticeable features than the separating members 203a, 203b of the chocolate egg 300.

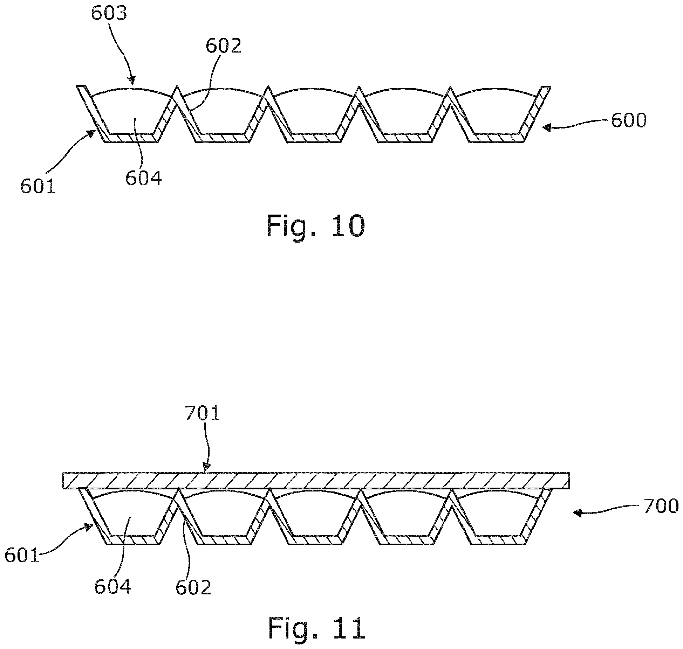

Figures 10 and 11 together illustrate an embodiment of the method of the second aspect of the invention. Figure 10 illustrates a cross-section of an at least partially filled confectionery shell for use in a yet further embodiment of the method of the second aspect, in the form of half a Cadbury Dairy Milk Caramel chocolate bar (half bar 600). The half bar 600 comprises a chocolate shell 601 having a number of separating members 602 which define multiple sections 603 within the shell 601. Each section 603 contains a caramel filling 604.

As can be seen in Figure 11, the half bar 600 of Figure 10 is sealed with a chocolate base 701 in order to form a complete chocolate bar 700. The sealing process may comprise heating the points of contact between the base 701 and the shell 601 before bringing them into contact, and then allowing them to cool.

The above embodiments are described by way of example only. Many variations are possible without departing from the scope of the invention as defined in the appended claims.

## Claims

1. A method of manufacturing a partially-filled confectionery shell comprising the steps of;
a) depositing a solidifiable confectionery material into a mould cavity;
b) moulding the solidifiable confectionery material within the mould cavity to form a confectionery shell;
c) forming at least one separating member integral with and protruding from the confectionery shell which defines a boundary between at least two sections of the confectionery shell; and
d) depositing an edible material into at least one section of the confectionery shell to form a partially-filled confectionery shell, wherein the at least one separating member prevents at least a portion of the edible material within a section from entering an adjacent section, and wherein no edible material is deposited into at least one section.

2. A method as claimed in claim 1 wherein steps b) and c) comprise cold-stamping the solidifiable confectionery material using a stamp configured to form the at least one separating member.

3. The method as claimed in claim 2, wherein the stamp comprises at least one stamp body with at least one cavity into which at least a portion of the solidifiable confectionery material flows, and wherein the confectionery material which flows into the or each cavity at least partially solidifies to form at least one separating member.

4. The method as claimed in claim 2 or 3, wherein the stamp comprises two or more stamp bodies with at least one gap therebetween into which at least a portion of the solidifiable confectionery material flows, and wherein the confectionery material which flows into the or each gap at least partially solidifies to form at least one separating member

5. The method as claimed in any preceding claim, comprising forming at least one separating member which protrudes to a maximum height of 2 mm below the rim of the shell.

6. The method as claimed in any preceding claim, comprising forming at least one separating member which protrudes to a maximum height of 50% towards the shell rim.

7. The method as claimed in any preceding claim, comprising forming at least one separating member which protrudes to a maximum height of 30% towards the shell rim.

8. The method as claimed in any preceding claim, wherein step d) comprises depositing an edible material into at least one section such that it protrudes to above the maximum height of at least one adjacent separating member.

9. The method as claimed in any preceding claim wherein step d) comprises not depositing an edible material into a section at one end of the shell or sections at both ends of the shell.

10. The method as claimed in any preceding claim, wherein the method comprises the manufacture of an at least partially filled half-egg shaped confectionery shell.

11. The method as claimed in any preceding claim, wherein steps b) and c) comprise cold-stamping the solidifiable confectionery material to form the confectionery shell, and wherein the method further comprises the step of sealing the confectionery shell to provide a partially filled confectionery product.

12. A partially-filled confectionery shell comprising at least one separating member integrally formed with, and protruding from, the confectionery shell, the or each separating member defining a boundary between at least two sections of the confectionery shell, wherein at least one section is filled and at least one section is unfilled.

13. The partially-filled confectionery shell as claimed in claim 12 comprising an unfilled section at one end thereof.

## Patentansprüche

1. Verfahren zum Herstellen einer teilweise gefüllten Süßwarenhülle, umfassend die Schritte;
a) Abscheiden eines verfestigbaren Süßwarenmaterials in einen Formhohlraum;
b) Formen des verfestigbaren Süßwarenmaterials innerhalb des Formhohlraums, um eine Süßwarenhülle zu bilden;
c) Ausbilden mindestens eines Trennelements, das einstückig mit der Süßwarenhülle ist und aus dieser hervorsteht, was eine Grenze zwischen mindestens zwei Abschnitten der Süßwarenschale definiert; und
d) Abscheiden eines essbaren Materials in mindestens einen Abschnitt der Süßwarenhülle, um eine teilweise gefüllte Süßwarenhülle zu bilden, wobei das mindestens eine Trennelement verhindert, dass mindestens ein Teil des essbaren Materials innerhalb eines Abschnitts in einen angrenzenden Abschnitt eintritt, und wobei kein essbares Material in mindestens einen Abschnitt abgeschieden wird.

2. Verfahren nach Anspruch 1, wobei die Schritte b) und c) das Kaltprägen des verfestigbaren Süßwarenmaterials unter Verwendung eines Stempels umfassen, der konfiguriert ist, um das mindestens eine Trennelement zu bilden.

3. Verfahren nach Anspruch 2, wobei der Stempel mindestens einen Stempelkörper mit mindestens einem Hohlraum umfasst, in den mindestens ein Teil des verfestigbaren Süßwarenmaterials fließt, und wobei das Süßwarenmaterial, das in den oder jeden Hohlraum fließt, mindestens teilweise verfestigt, um mindestens ein Trennelement zu bilden.

4. Verfahren nach Anspruch 2 oder 3, wobei der Stempel zwei oder mehr Stempelkörper mit mindestens einem Spalt dazwischen umfasst, in den mindestens ein Teil des verfestigbaren Süßwarenmaterials fließt, und wobei das in den oder jeden Spalt einströmende Süßwarenmaterial mindestens teilweise verfestigt, um mindestens ein Trennelement zu bilden

5. Verfahren nach einem der vorstehenden Ansprüche, umfassend das Ausbilden mindestens eines Trennelements, das bis zu einer maximalen Höhe von 2 mm unter den Rand der Schale vorsteht.

6. Verfahren nach einem der vorhergehenden Ansprüche, umfassend das Ausbilden mindestens eines Trennelements, das bis zu einer maximalen Höhe von 50 % in Richtung des Hüllenrands vorsteht.

7. Verfahren nach einem der vorhergehenden Ansprüche, umfassend das Ausbilden mindestens eines Trennelements, das bis zu einer maximalen Höhe von 30 % in Richtung des Hüllenrands vorsteht.

8. Verfahren nach einem der vorstehenden Ansprüche, wobei Schritt d) das Abscheiden eines essbaren Materials in mindestens einen Abschnitt umfasst, sodass es über die maximale Höhe mindestens eines benachbarten Trennelements vorsteht.

9. Verfahren nach einem der vorstehenden Ansprüche, wobei Schritt d) kein Abscheiden eines essbaren Materials in einen Abschnitt an einem Ende der Schale oder Abschnitte an beiden Enden der Schale umfasst.

10. Verfahren nach einem der vorhergehenden Ansprüche, wobei das Verfahren die Herstellung einer mindestens teilweise gefüllten halbeigeformten Süßwarenhülle umfasst.

11. Verfahren nach einem der vorstehenden Ansprüche, wobei die Schritte b) und c) das Kaltprägen des verfestigbaren Süßwarenmaterials zum Bilden der Süßwarenhülle umfassen, und wobei das Verfahren ferner den Schritt des Versiegelns der Süßwarenhülle umfasst, um ein teilweise gefülltes Süßwarenprodukt bereitzustellen.

12. Teilweise gefüllte Süßwarenhülle, umfassend mindestens ein einstückig mit der Süßwarenhülle ausgebildetes und aus diesem hervorstehendes Trennelement, wobei das oder jedes Trennelement eine Grenze zwischen mindestens zwei Abschnitten des Süßwarenmantels definiert, wobei mindestens ein Abschnitt gefüllt ist und mindestens ein Abschnitt ungefüllt ist.

13. Teilweise gefüllte Süßwarenhülle nach Anspruch 12, die einen ungefüllten Abschnitt an einem Ende davon umfasst.

## Revendications

1. Procédé de fabrication d'une coque de confiserie partiellement fourrée comprenant les étapes consistant à ;
a) déposer un matériau de confiserie solidifiable dans une cavité de moule ;
b) mouler le matériau de confiserie solidifiable au sein de la cavité de moule pour former une coque de confiserie ;
c) former au moins un élément de séparation solidaire de, et dépassant de, la coque de confiserie qui définit une limite entre au moins deux sections de la coque de confiserie ; et
d) déposer un matériau comestible dans au moins une section de la coque de confiserie pour former une coque de confiserie partiellement fourrée, l'au moins un élément de séparation empêchant au moins une partie du matériau comestible au sein d'une section de pénétrer dans une section adjacente, et aucun matériau comestible n'étant déposé dans au moins une section.

2. Procédé selon la revendication 1 dans lequel les étapes b) et c) comprennent un estampage à froid du matériau de confiserie solidifiable à l'aide d'une étampe conçue pour former l'au moins un élément de séparation.

3. Procédé selon la revendication 2, dans lequel l'étampe comprend au moins un corps d'étampe avec au moins une cavité dans laquelle au moins une partie du matériau de confiserie solidifiable s'écoule, et dans lequel le matériau de confiserie qui s'écoule dans la ou dans chaque cavité se solidifie au moins partiellement pour former au moins un élément de séparation.

4. Procédé selon la revendication 2 ou 3, dans lequel l'étampe comprend deux corps d'étampe ou plus avec au moins un espace entre eux dans lequel au moins une partie du matériau de confiserie solidifiable s'écoule, et dans lequel le matériau de confiserie qui s'écoule dans l'espace ou dans chaque espace se solidifie au moins partiellement pour former au moins un élément de séparation

5. Procédé selon l'une quelconque revendication précédente, comprenant la formation d'au moins un élément de séparation qui dépasse jusqu'à une hauteur maximale de 2 mm en dessous du bord de la coque.

6. Procédé selon l'une quelconque revendication précédente, comprenant la formation d'au moins un élément de séparation qui dépasse jusqu'à une hauteur maximale de 50 % en direction du bord de coque.

7. Procédé selon l'une quelconque revendication précédente, comprenant la formation d'au moins un élément de séparation qui dépasse jusqu'à une hauteur maximale de 30 % en direction du bord de coque.

8. Procédé selon l'une quelconque revendication précédente, dans lequel l'étape d) comprend le dépôt d'un matériau comestible dans au moins une section de telle sorte qu'il dépasse jusqu'au-dessus de la hauteur maximale d'au moins un élément de séparation adjacent.

9. Procédé selon l'une quelconque revendication précédente dans lequel l'étape d) comprend le fait de ne pas déposer de matériau comestible dans une section au niveau d'une extrémité de la coque ou dans des sections au niveau de l'une et l'autre des extrémités de la coque.

10. Procédé selon l'une quelconque revendication précédente, le procédé comprenant la fabrication d'au moins une coque de confiserie en forme de demiœuf partiellement fourrée.

11. Procédé selon l'une quelconque revendication précédente, dans lequel les étapes b) et c) comprennent un estampage à froid du matériau de confiserie solidifiable pour former la coque de confiserie, et le procédé comprenant en outre l'étape de scellage de la coque de confiserie pour fournir un produit de confiserie partiellement fourré.

12. Coque de confiserie partiellement fourrée comprenant au moins un élément de séparation formé d'un seul tenant avec, et dépassant de, la coque de confiserie, le ou chaque élément de séparation définissant une limite entre au moins deux sections de la coque de confiserie, au moins une section étant fourrée et au moins une section étant non fourrée.

13. Coque de confiserie partiellement fourrée selon la revendication 12 comprenant une section non fourrée au niveau d'une extrémité de celle-ci.
